**Europäisches Patentamt**

(19) **European Patent Office**

**Office européen des brevets**

(11) Numéro de publication: **0 111 351**
**B1**

(12) ## FASCICULE DE BREVET EUROPEEN

(45) Date de publication du fascicule du brevet:
16.07.86

(51) Int. Cl.⁴: **G 02 B 25/00**, G 02 B 3/00

(21) Numéro de dépôt: 83201593.7

(22) Date de dépôt: 08.11.83

(54) Loupe bioculaire.

(30) Priorité: 10.11.82 FR 8218920

(43) Date de publication de la demande:
20.06.84 Bulletin 84/25

(45) Mention de la délivrance du brevet:
16.07.86 Bulletin 86/29

(84) Etats contractants désignés:
DE FR GB NL SE

(56) Documents cités:
DE - A - 2 432 116
DE - A - 2 929 971
DE - C - 502 708
FR - A - 2 172 415
US - A - 3 764 194
US - A - 4 184 749
US - A - 4 286 844

(73) Titulaire: **TELECOMMUNICATIONS RADIOELECTRIQUES ET TELEPHONIQUES T.R.T., 88, rue Brillat Savarin, F-75013 Paris (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB NL SE**

(72) Inventeur: **Loy, Fernand, SOCIETE CIVILE S.P.I.D. 209 rue de l'Université, F-75007 Paris (FR)**

(74) Mandataire: **Chaffraix, Jean et al, Société Civile S.P.I.D. 209, rue de l'Université, F-75007 Paris (FR)**

## Description

L'invention concerne une loupe bioculaire à grand champ pour les systèmes de visualisation comportant une lentille épaisse biconvexe réalisée dans un matériau d'indice $n_1$ constituée par deux dioptres sphériques concentriques, le second dioptre situé en regard de l'objet observé ayant un rayon égal au quotient du rayon du premier dioptre par l'indice $n_1$.

On connaît l'utilisation des loupes monoculaires et bioculaires dans de tels systèmes utilisant soit des tubes à intensification de lumière, soit des tubes cathodiques. Ces loupes fournissent des images virtuelles agrandies des images formées sur les phosphores des tubes. Les loupes bioculaires permettent une vision plus confortable que les monoculaires pour les systèmes qui ne comprennent qu'un seul tube.

Le calcul d'une loupe bioculaire à grand champ n'est pas simple et les systèmes connus à ce jour dont le champ total est de l'ordre de 40 degrés sont de qualité médiocre car les aberrations optiques sont imparfaitement corrigées. Les brevets francais n° 2 172 945 et 2 172 415 illustrent la complexité de tels systèmes.

Le but de l'invention est d'atteindre une excellente correction desdites aberrations avec un très petit nombre de lentilles dans un très grand champ allant jusqu'à 80 à 90 degrés, grâce à l'utilisation des propriétés des dioptres aplanétiques et à leur association à des conducteurs d'image en fibres optiques. Conformément à l'invention, un conducteur d'image en fibres optiques a l'une de ses extrémités collée sur la surface de l'objet et l'autre extrémité sphérique collée sur la surface dudit second dioptre, pour transformer sans grossissement ledit objet en un objet concave de même rayon que celui dudit second dioptre, l'axe passant par le centre commun desdits dioptres et normal au plan de l'objet constituant l'axe optique du système, une image virtuelle agrandie dudit objet plan étant formée sur la surface sphérique concentrique auxdits dioptres et de rayon égal au produit du rayon du premier dioptre par l'indice $n_1$, ladite image virtuelle et l'image transportée sur la surface du second dioptre remplissant ainsi la condition d'aplanétisme.

L'invention sera mieux comprise à l'aide de la description suivante de quelques modes de réalisation donnés à titre d'exemple, ladite description étant accompagnée de dessins qui représentent:

Figure 1: un schéma illustrant les propriétés du dioptre sphérique.

Figure 2: un mode de réalisation de la loupe biculaire selon l'invention.

Figure 3: le même mode de réalisation de la loupe bioculaire avec un système optique additionnel pour obtenir une image plus éloignée.

Figures 4a et 4b: deux réalisations de loupe achromatique.

Figure 5: une réalisation de loupe à faible encombrement.

Figure 6: une réalisation de loupe à oculaire coudé pour des systèmes de forme périscopique.

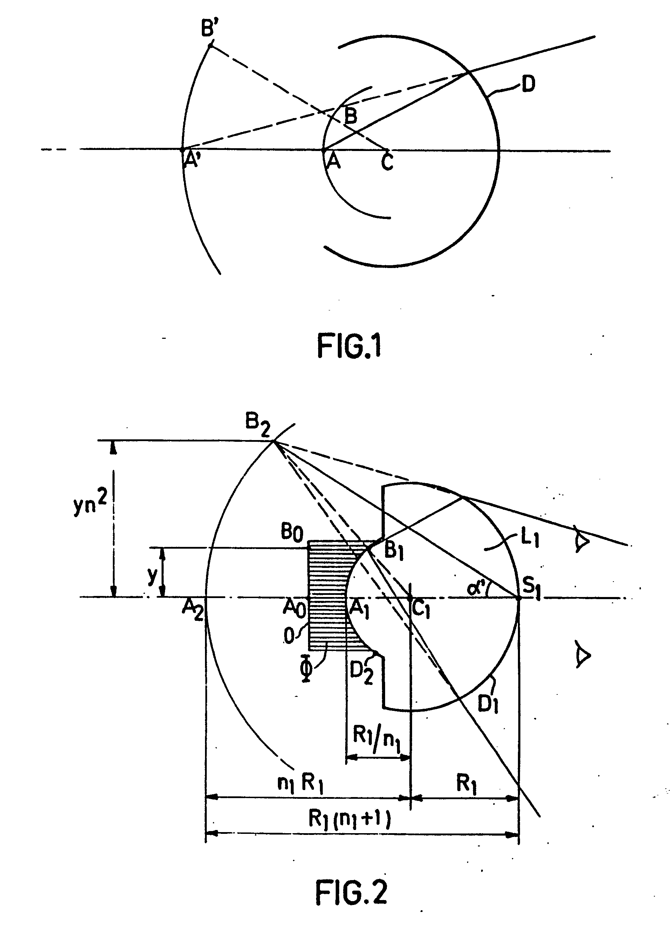

Il est bien connu que le dioptre sphérique D de centre C et de rayon R représenté sur la fig. 1 est aplanétique pour le couple de points A et A' tels que CA = R/n et CA' = nR, n étant l'indice de réfraction du verre.

Par extension, en prenant C comme centre de symétrie, tous points tels que B et B' situés respectivement sur les systèmes concentriques de rayons CA et CA' sont aplanétiques.

Il en résulte donc qu'un seul dioptre sphérique est capable de donner d'un objet AB situé sur une sphère, une image virtuelle agrandie A'B' elle-même sphérique et parfaitement corrigée de toutes les aberrations géométriques.

La figure 2 montre un mode de réalisation de la loupe bioculaire selon l'invention. Elle comporte une lentille épaisse biconvexe $L_1$ associée à un conducteur d'image en fibres optiques $\phi$.

La lentille $L_1$ réalisée dans un matériau d'indice $n_1$ est constituée par deux dioptres sphériques concentriques $D_1$ et $D_2$ de centre $C_1$ et dont les rayons respectifs ont pour valeur $R_1$ et $R_1/n_1$, le dioptre $D_2$ étant situé en regard de l'objet plan observé dont la trace est en O sur le plan de la figure. Le conducteur d'image en fibres optiques $\phi$ a son extrémité plane collée sur la surface de l'objet et son extrémité sphérique collée sur la surface du dioptre $D_2$. On a ainsi réalisé une loupe monoculaire ou bioculaire dans sa forme la plus simple selon l'invention.

On doit noter que l'objet observé n'est pas nécessairement plan. Il pourrait avoir un rayon de courbure quelconque pourvu que la fibre optique ait le même rayon.

Le point $A_o$ étant la projection orthogonale du centre $C_1$ sur la trace O de l'objet observé, le système donne d'un segment de droite $A_oB_o = y$ pris sur cette trace et transporté par le conducteur d'image $\phi$ en $A_1B_1$ sur le dioptre $D_2$, une image virtuelle agrandie $A_2B_2$ située sur une sphère de centre $C_1$ et de rayon égal à $n_1R_1$.

Le grandissement de la loupe est égal à $n_1^2$ et l'angle sous lequel on peut voir l'image à partir du sommet $S_1$ de la loupe (trace de l'axe optique $A_oC_1$ sur le dioptre $D_1$) est égal à:

$$\alpha' = \frac{y\, n_1^2}{R_1\,(n_1 + 1)} \quad \text{lorque y est petit.}$$

Le grossissement de la loupe est $G = \dfrac{\alpha'}{\alpha}$, $\alpha$ étant par définition l'angle sous lequel on voit l'objet à l'oeil nu lorsqu'il se trouve à la distance minimale de vision distincte soit 250 mm: $\alpha = \dfrac{y}{250}$. On a donc:

$$G = \frac{250\, n_1^2}{R_1\,(n_1 + 1)}, \text{ R étant exprimé en millimètres.}$$

On remarque qu'il est intéressant d'utiliser un indice fort.

Cette loupe peut fonctionner avec une très grande ouverture numérique puisque l'angle d'incidence sur le dioptre sphérique peut atteindre l'incidence rasante.

La figure montre comment les deux yeux de l'observateur peuvent voir l'image $B_2$ du point $B_o$.

Sous cette forme la plus simple ne comprenant qu'une seule lentille et une plaque de fibres optiques cette loupe est rigoureusement aplanétique. Son champ total $2\alpha$ pour un oeil situé au sommet $S_1$ peut aller jusqu'à 180 degrés avec une qualité constante.

Seul le chromatisme n'est pas corrigé.

Cette loupe est un instrument parfait en monochromatique.

Cette formule d'oculaire à une seule lentille $L_1$ a l'inconvénient de fournir une image virtuelle à distance relativement proche. On pallie ce défaut en disposant un système optique additionnel entre la lentille $L_1$ et l'observateur de façon à ce que ce système donne de l'image virtuelle $A_2B_2$ jouant alors le rôle d'objet virtuel une autre image virtuelle à distance convenable pour l'observateur.

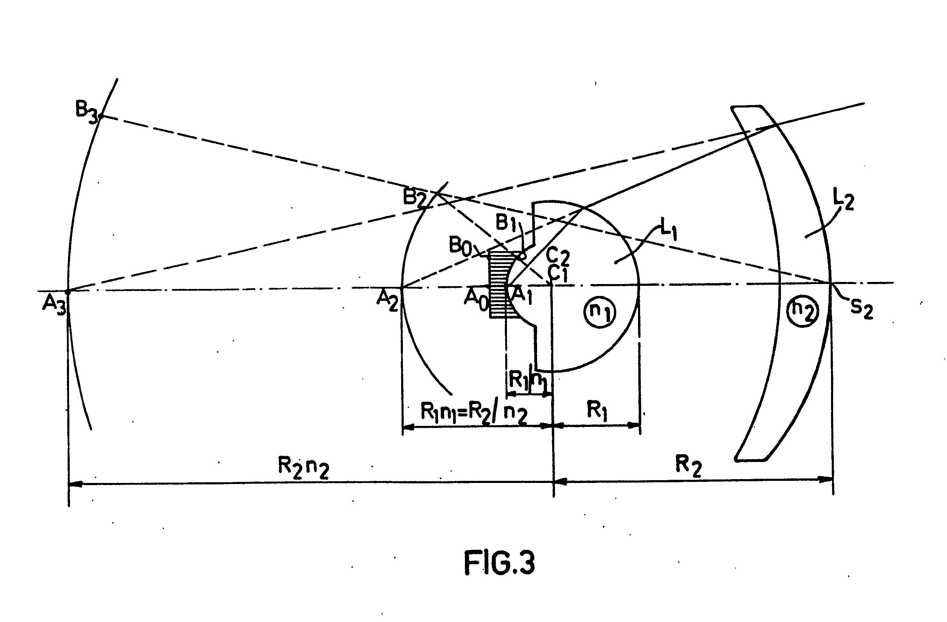

Ce système optique additionnel représenté sur la fig. 3 peut avantageusement être constitué d'un ménisque aplanétique convergent $L_2$ d'indice $n_2$ donnant de $A_2B_2$ l'image virtuelle $A_3B_3$. La face concave de ce ménisque a son rayon de courbure centré sur $A_2$ et la face convexe travaille aux points aplanétiques pour les points $A_2$ et $A_3$. Afin de conserver un centre de symétrie, on s'arrange pour que cette face concave ait son centre $C_2$ confondu avec le centre $C_1$ de la lentille $L_1$. Cette condition est satisfaite lorsque son rayon de courbure a pour valeur: $R_2 = R_1n_1n_2$. L'image du point $A_3$ se forme alors à la distance du sommet $S_2$ de $L_2$ telle que l'on ait:

$$S_2A_3 = R_1n_1n_2(n_2 + 1).$$

Si cette distance n'est pas jugée suffisante, on peut ajouter d'autres ménisques $L_3$, $L_4$ ... $L_p$ réalisés respectivement dans des matériaux d'indices $n_3$, $n_4$ ... $n_p$ et qui fonctionnent sur le même modèle, la face concave d'un ménisque de rang i quelconque compris entre 2 et p ou égal à p étant centrée sur le point de rencontre de l'axe optique avec l'image virtuelle formée par le ménisque de rang i - 1 et la face convexe dudit ménisque de rang i ayant son centre confondu avec celui de la lentille $L_1$ et son rayon de courbure $R_i = R_1 n_1 n_2 ... n_i$. On obtient ainsi un système aplanétique capable de donner une excellente qualité d'image dans un très grand champ, parce que le système a $C_1$ pour centre de symétrie. La qualité est constante en fonction de l'angle de champ. Pour la plupart des applications, deux à trois lentilles suffisent.

Cette loupe est donc un instrument parfait fonctionnant en monochromatique ou dans un spectre étroit comme celui de certains phosphores de tube image.

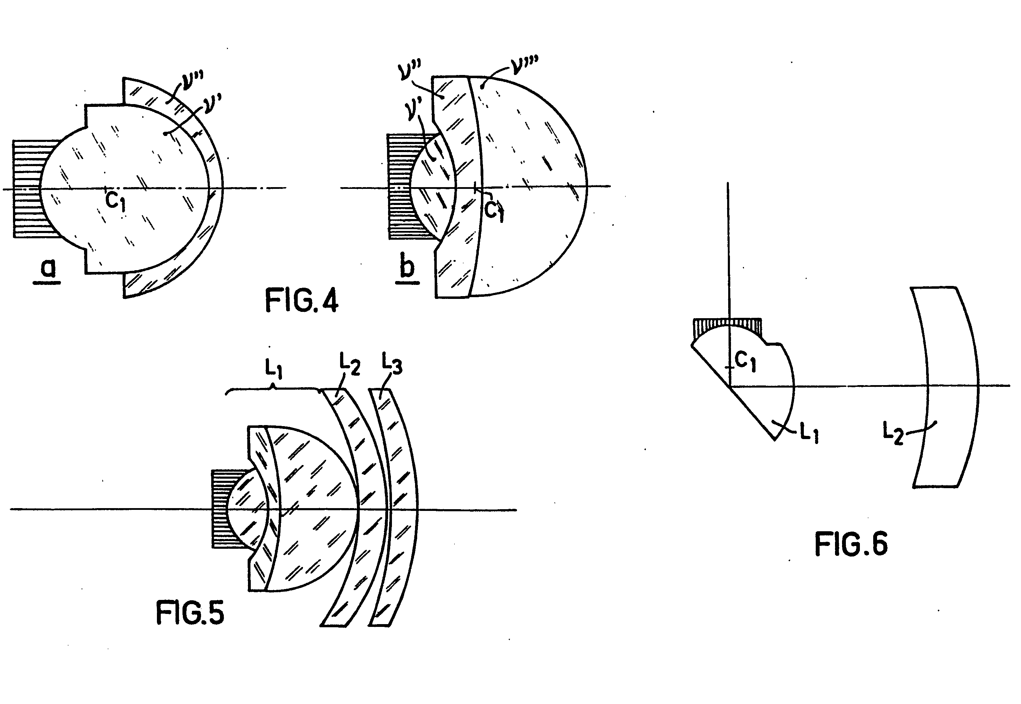

Si la bande spectrale est large, l'achromatisation est possible. Il suffit de dédoubler la lentille épaisse $L_1$ et d'utiliser deux verres d'indices voisins et de dispersions différentes. La loupe achromatique représentée sur la fig. 4a comprend alors deux lentilles collées: une convergente à faible dispersion $\upsilon'$ et une divergente à forte dispersion $\upsilon''$.

Lorsque les indices sont égaux, la loupe est rigoureusement aplanétique dans tout le champ. Le chromatisme seul varie légèrement en fonction du champ car le système optique n'a plus de centre symétrie.

Lorsque les indices sont voisins, l'aplanétisme n'est plus strictement réalisé, mais on s'écarte très peu de la condition d'aplanétisme et la correction est pratiquement parfaite.

La fig. 4b représente une loupe achromatique constituée de trois lentilles d'indices très voisins et de dispersions différentes. La lentille $L_1$ comprend par exemple une divergente à forte dispersion $\upsilon''$ collée entre deux convergentes à faibles dispersions $\upsilon'$ et $\upsilon'''$.

Dans le système de loupe bioculaire comportant des éléments supplémentaires destinés à former l'image à une distance plus éloignée, la lentille $L_2$ peut être achromatisée en la dédoublant en deux lentilles collées fabriquées dans des verres d'indices voisins et de dispersions différentes.

Lorsque les conditions

$$\frac{R_2 = R_1n_1n_2 \qquad \text{pour la lentille } L_2}{R_p = R_1n_1n_2 ... n_p \text{ pour la lentille } L_p} \quad \text{sont satis-}$$

faites, le système constitué par les p lentilles a pour centre de symétrie le centre de courbure du dioptre $D_1$. On a alors un système aplanétique dont la qualité est constante en fonction de l'angle de champ.

Si pour certaines applications, on accepte une légère dégradation de la qualité en fonction de l'angle de champ, ce qui est en général consenti pour tous les systèmes optiques, cette condition peut ne pas être strictement satisfaite. La lentille $L_2$ est toujours une lentille aplanétique dont le dioptre concave a son centre de courbure confondu avec $A_2$ et dont le dioptre convexe travaille aux points aplanétiques pour les points $A_2$ et $A_3$, mais on peut réduire l'intervalle d'air séparant $L_1$ de $L_2$ de façon à réduire l'encombrement de l'oculaire. L'oculaire ainsi réalisé est toujours aplanétique pour le centre de champ. On peut ajouter une troisième lentille $L_3$ fonctionnant sur le même modèle.

Un tel oculaire est représenté sur la fig. 5. Il permet d'atteindre facilement 60 degrés de champ total en vision bioculaire avec une excellente correction des aberrations. La lentille $L_1$ est ici achromatisée: $L_1$ est composée de trois lentilles collées.

La fibre optique représentée est une fibre droite, mais cet oculaire peut être associé indifféremment à des fibres inverseuses ou à des fibres grossissantes, réductrices ou coudées.

Pour des systèmes de forme périscopique, il peut être avantageux de couder l'oculaire.

Cet oculaire peut aisément être coudé à l'intérieur de $L_1$ ainsi qu'il est représenté sur la fig. 6 car cette lentille est très épaisse. Il peut l'être également entre $L_1$ et $L_2$ ou dans $L_2$ en faisant cette dernière très épaisse. On peut en effet modifier l'épaisseur de $L_2$ sans modifier le fonctionnement du système; il suffit pour cela que son dioptre concave soit centré sur $A_2$.

Ce type de loupe bioculaire peut évidemment être utilisé comme loupe monoculaire. Il permet de réaliser des loupes de très grand diamètre parfaitement corrigées des aberrations.

La même formule optique convient à des objectifs à grande ouverture et à grand champ comme ceux utilisés avec des tubes à intensification de lumière. Une fibre optique dont la face d'entrée est courbe du côté de l'objectif et plane du côté du tube permet le couplage avec un tube intensificateur à entrée sur fibre optique.

## Revendications

1. Loupe bioculaire à grand champ pour les systèmes de visualisation comportant une lentille épaisse biconvexe réalisée dans un matériau d'indice $n_1$ constituée par deux dioptres sphériques concentriques, le second dioptre situé en regard de l'objet observé ayant un rayon égal au quotient du rayon du premier dioptre par l'indice $n_1$, caractérisé en ce que un conducteur d'image en fibres optiques a l'une de ses extrémités collée sur la surface de l'objet et l'autre extrémité sphérique collée sur la surface dudit second dioptre pour transformer sans grossissement ledit objet en un objet concave de même rayon que celui dudit second dioptre, l'axe passant par le centre commun desdits dioptres et normal an plan de l'objet constituant l'axe optique du système, une image virtuelle agrandie dudit objet plan étant formée sur la surface sphérique concentrique auxdits dioptres et de rayon égal au produit du rayon du premier dioptre par l'indice $n_1$, ladite image virtuelle et l'image transportée sur la surface du second dioptre remplissant ainsi la condition d'aplanétisme.

2. Loupe bioculaire selon la revendication 1, caractérisée en ce que ladite lentille épaisse est constituée de plusieurs lentilles accolées d'indices voisins de $n_1$ et de dispersions différentes afin de réaliser les corrections de chromatisme.

3. Loupe bioculaire selon l'une des revendications 1 à 2, caractérisée en ce qu'elle comporte entre ladite lentille épaisse constituant un élément de rang 1 et l'observateur, un élément supplémentaire de rang 2 constitué par un ménisque convergent ou p - 1 éléments supplémentaires de rang 2, 3 ... et p (p supérieur à 2) constités par des ménisques convergents disposés à la suite les uns des autres et réalisés respectivement dans des matériaux d'indices $n_2$, $n_3$ ... et $n_p$, la face concave d'un ménisque de rang i quelconque compris entre 1 et p ou égal à p étant un dioptre sphérique centré sur le point de rencontre de l'axe optique avec l'image virtuelle formée par l'élément de rang i - 1, la face convexe dudit ménisque étant un dioptre sphérique concentrique aux dioptres de la lentille épaisse et de rayon égal au produit du rayon dudit dioptre par les indices $n_1$, $n_2$ ... et $n_i$, l'image virtuelle agrandie formée par ledit ménisque de rang i sur une sphère concentrique à sa face convexe et de rayon égal au produit du rayon de cette face par l'indice $n_i$ remplissant ainsi la condition d'aplanétisme.

4. Loupe bioculaire selon la revendication 3, caractérisée en ce que chacun desdits ménisques est constitué de deux lentilles accolées d'indices voisins et de dispersions différentes afin de réaliser les corrections de chromatisme.

5. Loupe bioculaire selon l'une des revendications 3 à 4, caractérisée en ce que ladite lentille épaisse et lesdits éléments supplémentaires sont rapprochés les uns des autres afin de réaliser un oculaire à encombrement réduit.

6. Loupe bioculaire comportant un ou plusieurs éléments optiques associés à un conducteur d'image en fibres optiques droites selon l'une des revendications 1 à 5, caractérisée en ce que lesdits éléments optiques sont associés indifféremment à des fibres inverseuses, grossissantes, réductrices ou coudées.

7. Loupe bioculaire selon l'une des revendications 3 à 6, caractérisée en ce que pour réaliser des systèmes de forme périscopique, ladite loupe est avantageusement coudée soit à l'intérieur de ladite lentille épaisse, soit entre ladite lentille et le ménisque, soit à l'intérieur du ménisque à condition de donner à ce dernier une plus grande épaisseur.

## Patentansprüche

1. Binokularlupe mit grossem Gesichtsfeld für Bildwiedergabesysteme mit einer dicken bikonvexen Linse aus einem Werkstoff mit dem Index $n_1$, bestehend aus zwei konzentrischen sphärischen Dioptern, wobei das zweite Diopter dem zu beobachtenden Objekt zugewandt ist und einen Radius gleich dem Quotienten aus dem Radius des ersten Diopters und dem Index $n_1$ hat, dadurch gekennzeichnet, dass ein aus optischen Fasern bestehender Bildleiter mit einem Ende mit der Oberfläche des Objekts und mit dem anderen, sphärischen, Ende mit der Oberfläche des zweiten Diopters verklebt ist, um dieses Objekt ohne Vergrösserung in ein konkaves Objekt mit dem gleichen Radius wie der des zweiten Diopters umzuwandeln, wobei die durch die gemeinsame Mitte der genannten Diopter und senkrecht zur Objektebene verlaufende Achse, die optische Achse des Systems bildet, und wobei ein virtuelles vergrössertes Bild des flachen Objekts auf der sphärischen, zu den genannten Dioptern konzentrischen Oberfläche gebildet ist, und deren Radius gleich dem Produkt des Radius des ersten Diopters mit dem Index $n_1$ ist, wobei das virtuelle Bild und das auf die Oberfläche des zweiten Diopters übertragene Bild auf diese Weise die aplanatische Bedingung erfüllen.

2. Binokularlupe nach Anspruch 1, dadurch gekennzeichnet, dass die dicke Linse aus mehreren zusammengekitteten Linsen besteht, deren Indizes im Bereich von $n_1$ liegen und deren Streuungen zur Korrektur der chromatischen Aberration verschieden sind.

3. Binokularlupe nach einem der Ansprüche 1 und 2, dadurch gekennzeichnet, dass sie zwischen der genannten dicken Linse, welche ein Element mit Rangnummer 1 bildet, und dem Beobachter, ein zusätzliches Element mit Rangnummer 2 aufweist, welches aus einem konvergenten Meniskus oder aus p-1 zusätzlichen Elementen mit Rangnummern 2, 3 ... p (p grösser als 2) besteht, die als konvergente Menisken aufeinanderfolgen und deren Material Indizes $n_2$, $n_3$, ... bis $n_p$ aufweist, wobei die konkave Oberfläche eines Meniskus, dessen Rangnummer i einen beliebigen Wert zwischen 1 und p oder den Wert p haben kann, ein sphärisches Diopter bildet mit einer Zentrierung im Knotenpunkt der optischen Achse mit dem virtuellen Bild, das vom Element mit Rangnummer i - 1 erzeugt wird, wobei die konvexe Oberfläche des genannten Meniskus ein sphärisches und zu den Dioptern der dicken Linse konzentrisches Diopter ist, dessen Radius gleich dem Produkt aus dem Radius des genannten ersten Diopters und den Indizes $n_1$, $n_2$ ... und $n_i$ ist, wobei das vergrösserte virtuelle Bild vom Meniskus mit der Rangnummer i auf einer Kugelfläche erzeugt wird, die zu seiner konvexen Oberfläche konzentrisch ist und deren Radius gleich dem Produkt aus dem Radius der genannten Oberfläche und dem Index $n_i$ ist so dass auf diese Weise die aplanatische Bedingung erfüllt ist.

4. Binokularlupe nach Anspruch 3, dadurch gekennzeichnet, dass jeder der genannten Menisken aus zwei zusammengekitteten Linsen-Elementen mit benachbarten Indizes und mit verschiedenen Streuungen besteht, um die Korrektur der chromatischen Aberration zu verwirklichen.

5. Binokularlupe nach einem der Ansprüche 3 und 4, dadurch gekennzeichnet, dass die genannte dicke Linse und die genannten zusätzlichen Elemente zur Verwirklichung einer Lupe mit reduzierter Abmessung nahe beieinander angeordnet sind.

6. Binokularlupe mit einem oder mehreren optischen Elementen, die einem Bildleiter aus optischen geraden Fasern nach einem der Ansprüche 1 bis 5 zugeordnet sind, dadurch gekennzeichnet, dass diese optischen Elemente in versierenden, vergrössernden, reduzierenden oder gekrümmten Fasern zugeordnet sind.

7. Binokularlupe nach einem der Ansprüche 3 bis 6, dadurch gekennzeichnet, dass diese zur Verwirklichung von Periskopsystemen gekrümmt ist, und zwar entweder im Innern der genannten dicken Linse oder zwischen dieser Linse und dem Meniskus oder im Innern des Meniskus, dessen Dicke vergrössert ist.

**Claims**

1. A wide-field binocular eyepiece for use with display systems, comprising, a biconvex thick lens made of a material having an index $n_1$ and comprising two concentric spherical lens surfaces, the second lens surface, which faces the object being viewed, having a radius equal to the quotient of the radius of the first lens surface and the index $n_1$, characterized in that a fibre-optic image guide has one of its ends cemented to the surface of the object and has its spherical other surface cemented to said second lens surface for converting said object without magnification into a concave object having the same radius as said second lens surface, the optical axis of the system being formed by the axis which extends through the common centre of said lens surfaces perpendicularly to the object plane, a magnified virtual image of said flat object being formed on the spherical surface which is concentric with said lens surfaces and which has a radius equal to the product of the radius of the first lens surface and the index $n_1$ so that said virtual image and the image formed on the second lens surface satisfy the aplanatic condition.

2. A binocular eyepiece as claimed in claim 1, characterized in that said thick lens comprises a plurality of cemented lens elements having indices close to $n_1$ and having different dispersions in order to provide chromatic corrections.

3. A binocular eyepiece as claimed in claim 1 or 2, characterized in that between said thick lens, which constitutes an element of the order 1, and the viewer it comprises an additional element of the order 2, formed by a convergent meniscus lens or p - 1 additional elements of the order 2, 3 ... and p (p greater than 2) formed by convergent meniscus lenses arranged one after the other and made of materials having indices $n_2$, $n_3$, ... $n_p$ respectively, the concave surface of a meniscus lens of the order i, i having an arbitrary value between 1 and p or being equal to p, being a spherical lens surface which is centred on the point of intersection of the optical axis with the virtual image formed by the element of the order i - 1, the convex surface of said meniscus lens being a spherical surface which is concentric with the lens surfaces of the thick lens and which has a radius equal to the product of the radius of said first lens surface and the indices $n_1$, $n_2$, ... $n_i$, the magnified virtual image formed by said meniscus lens of the order i on a sphere which is concentric with its convex surface and which has a radius equal to the product of the radius of said surface and the index $n_i$ , thereby satisfying the aplanatic condition.

4. A binocular eyepiece as claimed in claim 3, characterized in that each of said meniscus lenses comprises two cemented lens elements having indices which are close to each other and having different dispersions in order to provide the chromatic corrections.

5. A binocular eyepiece as claimed in claim 3 or 4, characterized in that said thick lens and said additional elements are arranged close to each other in order to form a compact eyepiece.

6. A binocular eyepiece comprising one or a plurality of optical elements associated with a straight-optical-fibre image guide as claimed in any one of the claims 1 to 5, characterized in that said optical elements are associated indiscriminately with inverting, magnifying, reducing or bent fibres.

7. A binocular eyepiece as claimed in any one of the claims 3 to 6, characterized in that for the construction of a periscopic system said eyepiece suitably provides the deflection inside said thick lens or between said lens and the meniscus lens, or inside the meniscus lens provided that the meniscus lens is given a greater thickness.

FIG.1

FIG.2

FIG.3

FIG.6

FIG.4

FIG.5